(19) **Europäisches Patentamt / European Patent Office / Office européen des brevets**

(11) **EP 2 860 216 A1**

(12) **EUROPEAN PATENT APPLICATION**
published in accordance with Art. 153(4) EPC

(43) Date of publication:
**15.04.2015 Bulletin 2015/16**

(21) Application number: **13801339.6**

(22) Date of filing: **05.06.2013**

(51) Int Cl.:
*C08J 9/00* (2006.01)    *H01M 2/16* (2006.01)

(86) International application number:
**PCT/JP2013/065573**

(87) International publication number:
**WO 2013/183666 (12.12.2013 Gazette 2013/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2012   JP 2012129482**

(71) Applicant: **Mitsubishi Plastics, Inc.
Tokyo 100-8252 (JP)**

(72) Inventors:
• **YAMADA, Takeyoshi
  Shiga 5268660 (JP)**
• **USAMI, Yasushi
  Shiga 5268660 (JP)**
• **TAKEGAWA, Kouji
  Shiga 5268660 (JP)**

(74) Representative: **Gille Hrabal
Brucknerstrasse 20
40593 Düsseldorf (DE)**

(54) **POLYOLEFIN RESIN POROUS FILM**

(57)    The purpose of the present invention is to provide a polyolefin resin porous film, which is resistant to wrinkling in a transporting step in a high-temperature environment due to a high shrinkage stress, has superior coating suitability, maintains pore interconnectivity, and thus has superior air permeability. The polyolefin resin porous film of the present invention has a 1% modulus in the flow direction at 90°C of 4.5 MPa or more and an air permeability of 800 sec/100 ml or less.

Fig. 1

EP 2 860 216 A1

**Description**

Technical Field

The present invention relates to a polyolefin resin porous film, which can be used as a separator for packaging, sanitation, animal husbandry, agriculture, construction, medical treatment, separation membranes, light diffusion plates, or batteries, in particular, as a separator for a coating type lithium ion battery.

Background Art

Development for lithium ion secondary batteries has progressed in large-scale batteries associated with environmental problems, such as electric automobiles and emergency power applications, in addition to batteries for portable devices such as OA, FA, household electronics, and communication devices in the related art.

In these large-scale battery applications, high safety and capacity, a high output, and a high voltage are required, as compared with small batteries, and thus, improvement of each member of the battery has been studied. Electric automobiles that have recently attracted attention use batteries under a harsh environment, and as a result, heat resistance is particularly emphasized, and thus, a separator having excellent heat resistance has been studied. As an example in the related art, in which heat resistance is imparted, JP 2002-151044 (PTL 1) proposes a separator coated with a heat-resistant resin as a heat-resistant porous layer, and JP 2011-110704 (PTL 2) proposes a separator having a filler provided as a heat-resistant layer on the surface of a separator.

The heat-resistant layer is usually formed by coating a mixed solution including a heat-resistant resin that imparts heat resistance, or a filler, a resin binder, and a solvent onto the surface of a separator, and then removing the solvent through a drying step.

Meanwhile, as for a separator that is one of the members of a battery, a wet biaxial stretching method or a dry uniaxial stretching method has been used in the related art, but the dry biaxial stretching method having a high output and excellent cost performance has been studied. In International Publication No. 2007/046226 (PTL 3), biaxial stretching is carried out in a porous method using β crystals, whereby a porous film having high porosity is obtained. Also, the method is suitable for a separator for automobiles requiring a high output since the method can make high battery output characteristics expressed. Further, in International Publication No. 2010/147149 (PTL 4), a study to improve an elastic modulus by reducing a longitudinal stretching ratio and a lateral stretching ratio for the purpose of improving handling suitability has been made.

Citation List

Patent Literature

[PTL 1] JP-A-2002-151044
[PTL 2] JP-A-2011-110704
[PTL 3] International Publication No. 2007/046226
[PTL 4] International Publication No. 2010/147149

Summary of Invention

Technical Problem

However, when a heat-resistant layer described in PTLs 1 and 2 is provided by coating, the temperature of a separator increases in a drying step, and accordingly, the elastic modulus is lowered due to softening of materials. When the separator is stretched in the transporting direction, it is shrunk in the direction perpendicular to the transporting direction, thereby leading to wrinkling. As a result, there occurs a problem that coating is not applied in a uniform thickness, and thus, so-called coating suitability is not met.

Furthermore, a separator obtained by the preparation method described in PTL 3 has high porosity, and thus, insufficient rigidity, thereby causing a problem, for example, that wrinkling easily occurs with slight tension in a transporting step. Accordingly, in the case where a heat-resistant layer is provided by coating, it is difficult to form a heat-resistant layer with a uniform thickness. Further, also in the case where a heat-resistant layer is not provided on the surface of a porous film by coating, wrinkles are easily generated even when a raw roll product is formed by pulling the thin porous film having a high porosity through winding, thereby causing a problem that product precision is easily lowered.

In addition, in PTL 4, an elastic modulus (rigidity) at normal temperature is improved. However, a resin is softened at a high temperature, the elastic modulus is lowered, and wrinkles are easily generated in a transporting step in the same manner as in PTL 3. Accordingly, in the case of providing a coating layer and in the step of winding into a roll, problems occur. In addition, since the lateral stretching ratio is reduced and it becomes difficult to increase the porosity, the permeation characteristics of the obtained porous film are lowered and it is thus difficult to express sufficient battery performance.

The present invention has been made in view of the above-described problems, and it has an object to provide a polyolefin resin porous film, which is resistant to wrinkling in a transporting step in a high-temperature environment due to a high shrinkage stress, does not cause wrinkling in a step of providing a heat-resistant layer on the surface of a porous film by coating and/or a step of winding into a roll, and further, maintains pore interconnectivity, has superior air permeability, and can be suitably used, particularly as a separator for a battery.

Solution to Problem

In order to solve the above problems, the present invention provides a polyolefin resin porous film, which has a 1% modulus in the flow direction at 90°C of 4.5 MPa or more and an air permeability of 800 sec/100 ml or less.

Further, in the present invention, the shrinkage stress in the flow direction at 90°C is preferably 1.5 MPa or more.

Incidentally, in the present invention, for the polyolefin resin, a polypropylene resin is preferably a main component.

Further, in the present invention, the resin has a $\beta$ crystal activity.

Moreover, in the present invention, after the biaxial stretching, stretching is preferably carried out in the flow direction.

Specifically, preferably, the longitudinal stretching is carried out at a stretching temperature of 20°C to 130°C and at a stretching ratio of 3.0 times to 8.0 times in the flow direction (longitudinal direction),

then lateral stretching is carried out at a stretching temperature of 100°C to 160°C and a stretching ratio of 1.1 times to 6.0 times in the direction (lateral direction) perpendicular to the flow direction,

then a 1% to 20% relaxation treatment is carried out at 130°C or higher in the direction (lateral direction) perpendicular to the flow direction, and

thereafter, longitudinal re-stretching is carried out at a stretching ratio of 1.1 times or more in the flow direction (longitudinal direction).

Moreover, in the present invention, a heat-resistant layer is preferably provided on at least one side surface by coating.

Advantageous Effects of Invention

The polyolefin resin porous film according to the present invention has a 1% modulus in the flow direction at 90°C of 4.5 MPa or more, and is therefore resistant to wrinkling during the transport. Accordingly, the heat-resistant layer can be coated in a uniform thickness when being provided on the surface by coating while applying tension to the porous film. In addition, winding can be carried out while not causing wrinkling when winding into a roll by applying tension to the porous film, whereby it is possible to increase the accuracy of a product.

Further, the air permeability is set to 800 sec/100 ml or less, and therefore, the permeation characteristics are not lowered, and thus, it is possible to express sufficient battery performance.

Brief Description of Drawings

Fig. 1 is a schematic cross-sectional view of a battery housing the porous film of the present invention.
Fig. 2 is a diagram for explaining a method for fixing the porous film in the wide-angle X-ray diffractometry.

Description of Embodiments

Hereinafter, embodiments of the polyolefin resin porous film of the present invention will be described in detail.

Further, in the present invention, the term "main component" encompasses meanings that allow for the inclusion of other components within a scope that does not interfere with the function of the main component unless particularly stated otherwise, and while the content percentage of the main component is not particularly specified, the term "main component" encompasses meanings including 50% by mass or more, more preferably 70% by mass or more, and particularly preferably 90% by mass or more (including 100%) of a composition.

Further, when the term "X to Y" (X and Y are arbitrary numerals) is used, unless particularly defined otherwise, the term incorporates the meaning "X or more and Y or less," as well as the meanings "preferably more than X" and "preferably less than Y."

In addition, in some cases, the flow direction of a film-shaped material and a porous film is referred to as a "longitudinal direction", the direction perpendicular to the flow direction is referred to as a "lateral direction", the stretching in the flow direction is referred to as "longitudinal stretching", and the stretching in the direction perpendicular to the flow direction is referred to as "lateral stretching".

Hereinafter, the respective components constituting the polyolefin resin porous film of the present invention will be described.

(Polyolefin Resin)

Specific examples of the polyolefin resin include a polyethylene resin, a polypropylene resin and the like. Among these, the polypropylene resin is preferred.

(Polypropylene Resin)

Examples of the polypropylene resin include homopolypropylene (propylene homopolymer), random copolymers or block copolymers of propylene with α-olefins such as ethylene, 1-butene, 1-pentene, 1-hexene, 1-heptene, 1-octene, 1-nonene, 1-decene and the like. Among these, homopolypropylene is more suitably used from the viewpoint of maintaining the mechanical strength, the heat-resistance, or the like of the porous film.

Moreover, for the polypropylene resin, the isotactic pentad fraction (mmmm fraction), which indicates tacticity, is preferably from 80% to 99%, more preferably from 83% to 98%, and even more preferably from 85% to 97%. If the isotactic pentad fraction is too low, the porous film may have too low mechanical strength. On the other hand, although the upper limit of the isotactic pentad fraction is set to the upper limit industrially feasible at present, it does not apply in the case where a resin with a higher tacticity is developed at an industrial level in the future.

The isotactic pentad fraction (mmmm fraction) refers to a three-dimensional structure, or the proportion thereof, in which five methyl groups in the side chain with respect to a main chain of any five successive propylene units joined by carbon-carbon bonds are all positioned in the same direction. Assignment of signals to the methyl group regions is based on A. Zambelli, et al (Macromolecules 8, 687, (1975)).

Furthermore, it is preferable to use a polypropylene resin with an Mw/Mn, which is a parameter indicating molecular weight distribution, of 2.0 to 10.0, more preferably 2.0 to 8.0, and even more preferably 2.0 to 6.0. Although a lower Mw/Mn indicates a narrower molecular weight distribution, a polypropylene resin having an Mw/Mn of less than 2.0 has problems such as decreased extrusion formability, and is also difficult to produce industrially. A polypropylene resin having an Mw/Mn of more than 10.0 contains a large amount of low-molecular-weight components, which tends to decrease the mechanical strength of the porous film. The Mw/Mn is obtained by GPC (gel permeation chromatography).

Further, the melt flow rate (MFR) of the polypropylene resin is not particularly limited, but it is preferably from 0.5 g/10 min to 15 g/10 min in general, and more preferably from 1.0 g/10 min to 10 g/10 min. When the MFR is less than 0.5 g/10 min, the high melt viscosity of the resin during forming processing increases, and thus the productivity is lowered. On the other hand, when the MFR is more than 15 g/10 min, the obtained porous film has insufficient mechanical strength, which tends to cause a problem in practical use. The MFR is measured under the conditions of a temperature of 230°C and a load of 2.16 kg in accordance with JIS K7210.

As the polypropylene resin, for example, commercially available products such as trade names "NOVATEC PP" and "WINTEC" (both manufactured by Japan Polypropylene Corporation), "NOTIO" and "TAFMER XR" (both manufactured by Mitsui Chemicals, Inc.), "ZELAS" and "THERMORUN" (both manufactured by Mitsubishi Chemical Corporation), "SUMITOMO NOBRENE" and "TAFCELENE" (both manufactured by Sumitomo Chemical Co., Ltd.), "Prime TPO" (manufactured by Prime Polymer Co., Ltd.), "Adflex", "Adsyl", and "HMS-PP (PF814)" (all manufactured by SunAllomer Co., Ltd.), and "VERSIFY" and "INSPIRE" (both manufactured by Dow Chemical Company) can be used.

Further, the method for manufacturing the polypropylene resin is not particularly limited, but examples thereof include known polymerization methods using known polymerization catalysts, including polymerization methods using multi-site catalysts typified by a Ziegler-Natta type catalyst, or single-site catalysts typified by a metallocene-based catalyst.

The porous film of the present invention preferably has a β crystal activity.

The β crystal activity may be regarded as one index indicating that the polypropylene resin produces β crystals in a film-shaped material prior to stretching. If the polypropylene resin in a film-shaped material prior to stretching produces β crystals, micropores are formed by carrying out stretching thereafter, and as a result, it is possible to obtain a porous film having air permeability characteristics.

For the presence or absence of the "β crystal activity", the film is determined to have the "β crystal activity" in the case where the crystal diffraction peak temperature derived from the β crystals is detected by a differential scanning calorimeter as described later, and/or in the case where the crystal fusion peak temperature derived from the β crystals is detected by the measurement using X-ray analysis device as described later.

Specifically, when the porous film is heated from 25°C to 240°C at a heating rate of 10°C/min as measured by a differential scanning calorimeter (DSC) and kept thereat for one minute, then the porous film is lowered in temperature from 240°C to 25°C at a cooling rate of 10°C/min, and kept thereat for one minute, and the film is then heated again from 25°C to 240°C at a heating rate of 10°C/min, the film is determined to have a β crystal activity in the case where the crystal fusion peak temperature (Tmβ) derived from the β crystals of the polypropylene resin is detected.

Further, the β crystal activity degree of the porous film is calculated by the following equation, using the amount of crystal heat of fusion (ΔHmα) derived from the α crystals and the amount of crystal heat of fusion (ΔHmβ) derived from the P crystals of the detected polypropylene resin.

$$\beta \text{ Crystal activity degree (\%)} = [\Delta Hm\beta/(\Delta Hm\beta + \Delta Hm\alpha)] \times 100$$

For example, in the case where the polypropylene resin is homopolypropylene, the β crystal activity can be calculated from the amount of crystal heat of fusion (ΔHmβ) derived from the P crystals primarily detected in a range of 145°C or higher and lower than 160°C, and the amount of crystal heat of fusion (ΔHmα) derived from the α crystals primarily detected at 160°C or higher and 170°C or lower. Further, for example, in the case where the resin is a random polypropylene containing 1% by mol to 4% by mol copolymerized ethylene, the β crystal activity can be calculated from the amount of crystal heat of fusion (ΔHmα) derived from the β crystals primarily detected in a range of 120°C or higher and lower than 140°C, and the amount of crystal heat of fusion (ΔHmα) derived from the α crystals primarily detected at 140°C or higher and 165°C or lower.

A higher β crystal activity degree of the porous film is preferred. The P crystal activity degree is preferably 20% or more, more preferably 40% or more, and particularly preferably 60% or more. If the porous film has a β crystal activity degree of 20% or more, a porous film, in which many β crystals of the polypropylene resin is produced in the film-shaped material prior to stretching, many fine and uniform holes are uniformed by stretching, and the permeation characteristics are excellent, can be obtained.

The upper limit of the β crystal activity degree is not particularly limited, but since the effects are achieved more effectively at a higher β crystal activity degree, the nearer the upper limit is to 100%, the better.

Furthermore, the presence or absence of the β crystal activity can also be determined from a diffraction profile obtained by wide-angle X-ray diffractometry of a porous film that has undergone a specific heat treatment.

Specifically, the wide-angle X-ray diffractometry is carried out on a porous film that has undergone a heat treatment at 170°C to 190°C, which exceeds the melting point of the polypropylene resin (homopolypropylene), and has then been slowly cooled to generate and grow β crystals, and the film is determined to have β crystal activity when the diffraction peak derived from the (300) surfaces of the P crystals of the polypropylene resin is detected in a range of 2θ = 16.0° to 16.5°.

Details pertaining to the β crystal structure of the polypropylene resin and the wide-angle X-ray diffractometry can be found by referring to Macromol. Chem. 187, 643-652 (1986), Prog. Polym. Sci. Vol. 16, 361-404 (1991), Macromol. Symp. 89, 499-511 (1995), Macromol. Chem. 75, 134 (1964), and reference documents cited in these documents. A detailed method of evaluating β crystal activity using wide-angle X-ray diffractometry will be described in Examples as described later.

The β crystal activity can be measured in the state of the entire layer of the porous film even when the porous film of the present invention has a single-layer structure, and also in any case in which the film is laminated with other porous layers.

Examples of the method of obtaining the β crystal activity of the porous layer as described above include a method of not adding a material for promoting the production of the α crystals of a polypropylene resin, a method of adding polypropylene resin that has undergone a treatment for generating peroxide radicals as described in Japanes Patent No. 3739481, a method of adding a β crystal nucleating agent to a composition and the like.

(β Crystal Nucleating Agent)

Examples of the β crystal nucleating agent used in the present invention are given below, but the β crystal nucleating agent is not particularly limited as long as it promotes the production and growth of the β crystals in the polypropylene resin, and two or more kinds of the following examples may be mixed and used together.

Examples of the β crystal nucleating agent include amide compounds; tetraoxaspiro compounds; quinacridones;

iron oxide in a nanoscale size; alkali or alkali earth metal salts of carboxylic acids typified by 1,2-hydroxy potassium stearate, magnesium benzoate, magnesium succinate, magnesium phthalate and the like; aromatic sulfonic acid compounds typified by sodium benzene sulfonate, sodium naphthalene sulfonate and the like; diesters or triesters of dibasic or tribasic carboxylic acids; phthalocyanine-based pigments typified by phthalocyanine blue; binary compounds composed of a component A, which is an organic dibasic acid, and a component B, which is an oxide, a hydroxide, or a salt of a group IIA metal of the periodic table; or a composition composed of a cyclic phosphorous compound and a magnesium compound. Specific types of other nucleating agents are described in JP-A-2003-306585, JP-A-06-289566, and JP-A-09-194650.

Examples of commercially available products of β crystal nucleating agent include a β crystal nucleating agent "NJ Star NU-100" manufactured by New Japan Chemical Co., Ltd., and specific examples of the polypropylene resin to which the β crystal nucleating agent is added include polypropylene "Bepol B-022SP" manufactured by Aristech, polypropylene "Beta(β)-PP BE60-7032" manufactured by Borealis, polypropylene "BNX BETA PP-LN" manufactured by Mayzo and the like.

In the present invention, the β crystal nucleating agent is preferably blended into a polypropylene resin. The proportion of the β crystal nucleating agent added to the polypropylene resin needs to be suitably adjusted by the type of the P crystal nucleating agent, the composition of the polypropylene resin, or the like, but the proportion is preferably from 0.0001 parts by mass to 5.0 parts by mass of the β crystal nucleating agent per 100 parts by mass of the polypropylene resin. The proportion is more preferably from 0.001 parts by mass to 3.0 parts by mass, and even more preferably from 0.01 parts by mass to 1.0 part by mass. If the proportion is 0.0001 parts by mass or more, the β crystals of the polypropylene resin can be sufficiently produced and grown during the preparation, a sufficient β crystal activity can be ensured when the resin is used in a separator, and the desired air permeability is obtained. Further, when the β crystal nucleating agent is added in a proportion of 5.0 parts by mass or less, it is economically beneficial and there is no bleeding of the β crystal nucleating agent into the surface of the porous film, which is thus preferable.

In addition, even in the case where a layer containing the polypropylene resin other than the resin layer containing the polypropylene resin, for example, is laminated, the addition amounts of the β crystal nucleating agents in the respective layers may be either the same as or different from each other. The porous structure of the respective layers can be suitably adjusted by varying the addition amount of the β crystal nucleating agent.

(Other Components)

In the present invention, in addition to the components as described above, an additive commonly blended into resin compositions can be suitably added to the polypropylene resin within a range that does not significantly interfere with the effects of the present invention. Examples of the additive include a recycled resin produced from the trimming loss at the edges or the like; inorganic particles of silica, talc, kaolin, calcium carbonate, or the like; a pigment such as titanium oxide and carbon black; and additives such as a flame retardant, a weather-resistant stabilizer, a heat-resistant stabilizer, an anti-static agent, a melt viscosity enhancer, a crosslinking agent, a lubricant, a nucleating agent, a plasticizer, an anti-aging agent, an antioxidant, a light stabilizer, an ultraviolet ray absorbent, a neutralizer, an anti-clouding agent, an anti-blocking agent, a slipping agent, and a coloring agent, which are added for the purpose of improving or adjusting forming processability, productivity, and various properties of the porous film.

(Layer Configuration of Porous Film)

In the present invention, the porous film may be a single layer or a lamination. The layer configuration of the porous film is not particularly limited as long as there exists at least one layer containing a polyolefin resin (hereinafter referred to as an "A layer"). Further, another layer (hereinafter referred to as a "B layer") can also be layered within a range that does not interfere with the functions of the porous film. An example thereof is a configuration where a strength-preserving layer, a heat-resistant layer (a high-fusion temperature resin layer), a shutdown layer (a low-fusion temperature resin layer), and the like are laminated. When the film is used as a separator for a battery, for example, it is preferable to laminate a low-fusion point resin layer in which the pores are closed in a high-temperature atmosphere and the safety of the battery is ensured, as described in JP-A-04-181651.

Specific examples thereof include a two-layer structure formed by lamination of A layer/B layer, a three-layer structure formed by lamination of A layer/B layer/A layer, or B layer/A layer/B layer, or the like. It is also possible to combine these layers with a layer having another function to form three layers of three different types. In this case, the order of lamination with the layer having the other function is not particularly an issue. The number of layers may also be increased as necessary to four, five, six, or seven.

The physical properties of the porous film of the present invention can be freely adjusted by the layer configuration, the lamination ratio, the composition of each of the layers, and the preparation method.

(Coat Layer)

In the present invention, a coating layer (hereinafter simply referred to as a coat layer) may be laminated on at least one side surface of the polyolefin resin porous film. This coat layer is preferably used as a heat-resistant layer including a filler and a resin binder.

In addition, the polyolefin resin porous film of the present invention also encompasses a case where the heat-resistant layer is not provided by coating.

(Filler)

Examples of the filler that can be used in the present invention include an inorganic filler and an organic filler, but are not particularly limited thereto.

Examples of the inorganic filler include carbonates such as calcium carbonate, magnesium carbonate, and barium carbonate; sulfates such as calcium sulfate, magnesium sulfate, barium sulfate; chlorides such as sodium chloride, calcium chloride, and magnesium chloride; oxides such as aluminum oxide, calcium oxide, magnesium oxide, zinc oxide, titanium oxide, and silica; and silicates such as talc, clay, and mica. Among these, barium sulfate and aluminum oxide are preferred.

Examples of the organic filler include fillers made of thermoplastic resins and thermosetting resins such as ultrahigh-molecular-weight polyethylene, polystyrene, polymethyl methacrylate, polycarbonate, polyethylene terephthalate, polybutylene terephthalate, polyphenylene sulfide, polysulfone, polyethersulfone, polyetheretherketone, polytetrafluoroethylene, polyimide, polyetherimide, melamine, and benzoguanamine. Among these, crosslinked polystyrene or the like is particularly preferred.

The average particle diameter of the filler is preferably 0.1 $\mu$m or more, more preferably 0.2 $\mu$m or more, and even more preferably 0.3 $\mu$m or more, and the upper limit is preferably 3.0 $\mu$m or less, and more preferably 1.5 $\mu$m or less. When the average particle diameter is within the defined range, sufficient heat resistance can be expressed. An average particle diameter of 1.5 $\mu$m or less is also preferred from the viewpoints of the dispersibility of the filler in the coat layer.

Further, the "average particle diameter of the filler" in the present embodiment is a value measured according to methods using SEM.

In the coat layer, the content of the filler is preferably 100% by mass or more, and more preferably 200% by mass or more, with respect to 100% by mass of the resin binder. On the other hand, the upper limit is more preferably 1500% by mass or less, and even more preferably 800% by mass or less. If the content of the filler is 100% by mass or more with respect to 100% by mass of the resin binder, a porous film having pore interconnectivity can be manufactured, which can exhibit excellent air permeating performance, and is thus preferable. On the other hand, if the content of the filler is 1500% by mass or less, generation of cracks or peeling of the coat layer is inhibited, which is thus preferable since a sufficient stretching property is ensured.

(Resin Binder)

The resin binder that can be used as the coat layer in the present invention is not particularly limited as long as it can satisfactorily bond the filler and the polyolefin resin porous film, it is electrochemically stable, and it is stable in a non-aqueous electrolytic solution when the laminated porous film is used as a non-aqueous electrolytic solution secondary battery.

Specific examples thereof include an ethylene-vinyl acetate copolymer (EVA, structural units derived from vinyl acetate constituting 20% by mol to 35% by mol), an ethylene-acrylic acid copolymer such as an ethylene-ethyl acrylate copolymer, a fluororesin [polyvinylidene fluoride and the like], fluorine-based rubber, styrene-butadiene rubber (SBR), nitrile butadiene rubber (NBR), polybutadiene rubber (BR), polyacrylonitrile (PAN), polyacrylic acid (PAA), carboxymethyl cellulose (CMC), hydroxyethyl cellulose (HEC), polyvinyl alcohol (PVA), polyvinyl butyral (PVB), polyvinylpyrrolidone (PVP), poly-N-vinyl acetamide, a crosslinked acrylic resin, a polyurethane, and an epoxy resin. These organic binders may be used singly or in combinations of two or more kinds thereof. Among these, polyvinyl alcohol, polyvinylidene fluoride, styrene-butadiene rubber, carboxymethyl cellulose, and polyacrylic acid are preferred, and polyvinyl alcohol is more preferred from the viewpoints of heat resistance and a stretching property.

(Method for Preparing Coat Layer)

The coat layer can be prepared by coating a dispersion formed by dissolving or dispersing the filler and the resin binder in a solvent on at least one side surface of the polyolefin resin porous film to form a coat layer on the surface of the polyolefin resin porous film.

As the solvent, a solvent in which the filler and the resin binder can be dissolved or dispersed uniformly and stably is preferably used. Examples of such a solvent include N-methyl pyrrolidone, N,N-dimethyl formamide, N,N-dimethyl acetamide, water, ethanol, toluene, hot xylene, and hexane. Further, to stabilize the dispersion or to improve the ability of the polyolefin resin porous film to be coated, various additives including a dispersant such as a surfactant, a thickener, a wetting agent, an antifoaming agent, and a PH regulator containing oxygen or an alkali may be added to the dispersion. These additives are preferably those which can be removed when the solvent is removed or a plasticizer is extracted, but the additives may remain in the battery (in the laminated porous film) if they are electrochemically stable in the usage range of the non-aqueous electrolytic solution secondary battery, if they do not impede the battery reaction, and if they are stable up to about 200°C.

Examples of the method for dissolving or dispersing the filler and the resin binder in a solvent include a ball mill, a bead mill, a planetary ball mill, a vibrating ball mill, a sand mill, a colloid mill, an attritor, a roller mill, high-rate impeller dispersion, a disperser, a homogenizer, a high-rate impact mill, ultrasonic dispersion, and a mechanical stirring method with a stirring blade or the like.

The method for coating the dispersion on the surface of the polyolefin resin porous film may be carried out after the extrusion forming, after the longitudinal stretching step, or after the lateral stretching step. In particular, from the viewpoint that the drying step and the stretching step can be carried out simultaneously, the coating method is preferably carried out after the extrusion forming or the longitudinal stretching step.

The coating method in the coating step is not particularly limited as long as it can realize a required layer thickness or coating area. Examples of the coating method include methods using a gravure coater method, a small-diameter gravure coater method, a reverse roller coater method, a transfer roller coater method, a kiss coater method, a dip coater method, a knife coater method, an air doctor coater method, a blade coater method, a rod coater method, a squeeze coater method, a cast coater method, a die coater method, a screen printing method, and a spray coating method. The dispersion may be used to coat either only one surface or both surfaces of the polyolefin resin porous film, according to the application.

The solvent is preferably a solvent that can be removed from the dispersion coated on the polyolefin resin porous film. The method for removing the solvent is not particularly limited, and any method can be employed that does not have an adverse effect on the polyolefin resin porous film. Examples of the method for removing the solvent include a method of drying the polyolefin resin porous film at a temperature equal to or lower than the melting point of the film while keeping the polyolefin resin porous film held in place, a method of depressurizing and drying the film at a low temperature, and a method of immersing the film in a poor solvent relative to the resin binder to cause the resin binder to coagulate while simultaneously extracting the solvent.

(Porous Shape and Physical Properties of Polyolefin Resin)

In the polyolefin resin porous film of the present invention, it is important that the 1% modulus in the flow direction, that is, the longitudinal direction, at 90°C, should be 4.5 MPa or more, preferably 5.5 MPa or more, more preferably 6.0 MPa or more, and particularly preferably 7.0 MPa or more.

In general, due to the rigidity of the resin, the polyolefin resin porous film has an antagonistic force to tension caused by the transport, and thus, it is difficult to stretch the film. However, in the drying step of the coat layer, the drying time varies depending on the material, but in the case where an aqueous solvent is used in the dispersion, the drying temperature is higher than that of the organic solvent, thereby causing the film to be exposed in a state very demanding in terms of the rigidity of the porous film. Accordingly, in a high temperature environment, the antagonistic force is reduced since the polyolefin resin is softened. When the film is stretched from the rigidity of the porous film lost by the tension caused by the transport, shrinkage occurs in the direction perpendicular to the flow direction of the porous film, that is, in the lateral direction. At this time, wrinkles are expressed when the shrinkage rate in the lateral direction is large. As a result, since a large number of wrinkles occur in parallel with the longitudinal direction, the coating becomes poor. In this case, the thickness of the coat layer becomes uneven, and thus, heat resistance is reduced, which is thus not preferable.

As for a means for adjusting the 1% modulus in the flow direction at 90°C to 4.5 MPa or more, the 1% modulus can be attained by increasing the stretching ratio of the longitudinal stretching or the stretching ratio of the longitudinal re-stretching, or by decreasing the stretching ratio of the lateral stretching, as described later.

Furthermore, in the present invention, the shrinkage stress in the flow direction at 90°C is preferably 1.5 MPa or more, more preferably 2.0 MPa or more, and even more preferably 3.0 MPa or more. When the shrinkage stress in the flow direction at 90°C is 1.5 MPa or more, the elastic modulus in the longitudinal direction as an antagonistic force to the tension by the transport is improved. Further, since it is designed such that the shrinkage stress may work in the longitudinal direction in the temperature region in the drying step of the coat layer, the stretching in the longitudinal direction is inhibited even in a high temperature environment, and thus, expression of the wrinkles in the drying step of the coat layer can be prevented.

Further, when the shrinkage stress is 1.5 MPa or more, even though the elastic modulus of the porous film in a high-temperature environment is decreased, the porous film by the shrinkage stress is not easily stretched, which is thus preferable. A higher shrinkage stress in the flow direction at 90°C is more preferred, but the upper limit is preferably 10 MPa or less. When the shrinkage stress is 10 MPa or less, the shrinkage in the flow direction at normal temperature can be sufficiently inhibited, which is thus preferable. As for a means for enhancing the shrinkage stress in the flow direction at 90°C, the shrinkage stress can be enhanced by increasing the stretching ratio of the longitudinal stretching or the stretching ratio of the longitudinal re-stretching, or by decreasing the stretching ratio of the lateral stretching.

It is important that the air permeability of the polyolefin resin porous film of the present invention be 800 sec/100 ml or less. Further, the air permeability is preferably from 10 sec/100 ml to 600 sec/100 ml, and more preferably from 50 sec/100 ml to 400 sec/100 ml.

The air permeability indicates the difficulty in air permeation in the thickness direction of the porous film, and is specifically expressed in the number of seconds required for 100 ml of air to permeate into the film. Thus, the air permeability in a small numerical value means easy permeation, whereas the air permeability in a large numerical value means hard permeation. That is, the small numerical value indicates that the pore interconnectivity of the porous film in the thickness direction is good, whereas the large numerical value indicates that pore interconnectivity of the film in the thickness direction is poor. The pore interconnectivity is a communication degree of pores of the porous film in the thickness direction. If the polyolefin resin porous film of the present invention has a low air permeability, it can be used in various applications. For example, in the case of use in the separator for a non-aqueous electrolytic secondary battery, a low air permeability means ease of movement of the lithium ions, which is thus preferable since the battery performance is excellent. An air permeability of 800 sec/100 ml or less indicates that the porous film has pore interconnectivity, which suggests excellent air permeability. As for a means for improving the air permeability, the air permeability can be improved by increasing the stretching ratio of the lateral stretching or by decreasing the stretching ratio of the longitudinal re-stretching.

(Method for Preparing Polyolefin Resin Porous Film)

Next, the method for preparing the polyolefin resin porous film of the present invention will be described.

However, the present invention is not limited to a polyolefin resin porous film prepared by such a preparation process.

The method for manufacturing a film-shaped material is not particularly limited and known methods may be used, but examples thereof include a method in which a thermoplastic resin composition is melted using an extruder, and the composition is extruded from a T die, and cooled and solidified by a cast roll. Further, a method of cutting a film-shaped material prepared by a tubular method, and flattening the material can also be applied.

Examples of a method for stretching the film-shaped material include a roll stretching method, a rolling method, a tenter stretching method, and a simultaneous biaxial stretching method, and one or a combination of two or more of these methods is used to carry out uniaxial stretching, or biaxial or higher stretching.

Hereinafter, the details of the preparation method will be described.

First, a mixed resin composition containing a polyolefin resin, and if necessary, a thermoplastic resin, and an additive, is manufactured. For example, a polypropylene resin, a β crystal nucleating agent, and if necessary, other additives are either mixed, preferably using a Henschel mixer, a super mixer, a tumbler mixer, or the like, or are all put into a bag and mixed by hand blending, after which the materials are melt-kneaded in a single-screw or twin-screw extruder, a kneader, or the like, but preferably a twin-screw extruder, and the kneaded materials are then cut into pellets.

The pellets are introduced to an extruder and extruded from a T die extrusion mouthpiece to form a film-shaped material. The type of T die is not particularly limited. In the case where the polyolefin resin porous film of the present invention has a layered structure of two types of three layers, for example, the T die may be either a two-type three-layer multi-manifold type of die or a two-type three-layer feed block type of die.

The gap of the T die used herein is ultimately determined from the thickness, the stretching conditions, the draft ratio, various conditions, or the like of the porous film as finally required, but is commonly about 0.1 mm to 3.0 mm, and preferably 0.5 mm to 1.0 mm. A gap of less than 0.1 mm is not preferred from the viewpoint of a production rate, and a gap of more than 3.0 mm is not preferred from the viewpoint of production stability since the draft ratio increases.

In the extrusion forming, the extrusion processing temperature is suitably adjusted according to the fluid characteristics, the formability, and other characteristics of the resin composition, but generally, the temperature is preferably 180°C to 350°C, more preferably 200°C to 330°C, and even more preferably 220°C to 300°C. An extrusion processing temperature of 180°C or higher is preferred since the melted resin will have a sufficiently low viscosity, excellent formability, and improved productivity. On the other hand, when the extrusion processing temperature is 350°C or lower, the deterioration of the resin composition is inhibited, and consequently, reduction in the mechanical strength of the obtained polyolefin resin porous film can also be inhibited.

The cooling and solidifying temperature of the cast roll is preferably from 80°C to 150°C, more preferably from 90°C to 140°C, and even more preferably from 100°C to 130°C. By setting the cooling and solidifying temperature to the defined temperature ranges, there are unlikely to be problems such as the extruded melted resin sticking to and wrapping around the cast roll, and a film-shaped material can be formed efficiently, which is thus preferable. Further, in the film-shaped material having a β crystal activity, the β crystal ratio can be increased sufficiently and a sufficient porosity can be obtained, which is thus preferable.

The β crystal ratio of the polypropylene resin in the film-shaped material prior to stretching is preferably adjusted to 30% to 100% by setting a cast roll in the temperature range. The β crystal ratio is more preferably from 40% to 100%, even more preferably from 50% to 100%, and most preferably from 60% to 100%. With a β crystal ratio of 30% or more in the film-shaped material prior to stretching, porosification can be made easier by the subsequent stretching operation, and a porous film having good air permeability can be obtained.

The β crystal ratio in the film-shaped material prior to stretching is calculated by the following equation, using the amount of crystal heat of fusion ($\Delta Hm\alpha$) derived from the $\alpha$ crystals and the amount of crystal heat of fusion ($\Delta Hm\beta$) derived from the $\beta$ crystals of the polypropylene resin, which are detected using a differential scanning calorimeter when the film-shaped material is heated from 25°C to 240°C at a heating rate of 10°C/min.

$$\beta \; \text{Crystal ratio (\%)} = [\Delta Hm\beta/(\Delta Hm\beta + \Delta Hm\alpha)] \times 100$$

In the stretching step, the film may be stretched uniaxially in the flow direction (longitudinal direction) or in the direction (lateral direction) perpendicular to the flow direction, or the film may be stretched biaxially. In order to obtain an antagonistic force to tension caused by the transport in a high-temperature environment, which is intended by the present invention, the stretching in the flow direction after the biaxial stretching (hereinafter referred to as "longitudinal re-stretching") is preferably carried out, and the longitudinal re-stretching in the longitudinal direction and the lateral direction is more preferably carried out after the successive biaxial stretching.

Usually, in the case of carrying out the successive biaxial stretching, the molecules are oriented in the longitudinal direction by the first longitudinal stretching, and thus, the elastic modulus in the longitudinal direction is improved. However, the orientation of molecules in the longitudinal direction is reduced by the lateral stretching thereafter. After the successive biaxial stretching, the orientation of molecules is further improved in the longitudinal direction by carrying out the longitudinal re-stretching, and therefore, the elastic modulus is improved and the shrinkage stress can be expressed in a high-temperature environment. As a result, an antagonistic force by tension caused by the transport in the dry step of the coat layer is obtained, and accordingly, deformation of the porous film and expression of wrinkles are inhibited and the coating failure is reduced.

In the case of using the longitudinal re-stretching, it is necessary to timely select the stretching temperature according to the composition of the resin composition used, the crystal fusion peak temperature of the thermoplastic resin, the degree of crystallization of the polyolefin resin, or the like, but the stretching temperature is preferably selected within the ranges of the following conditions.

The stretching temperature of the first longitudinal stretching is controlled to preferably 20°C to 130°C, more preferably 40°C to 120°C, and even more preferably 60°C to 110°C. If the stretching temperature in the longitudinal stretching is 20°C or higher, the breakage during the longitudinal stretching hardly occurs, and formation of pore origins is carried out, which is thus preferable. On the other hand, if the stretching temperature in the longitudinal stretching is 130°C or lower, pore formation in the polyolefin resin occurs, and therefore, suitable pore formation can be carried out.

Further, the stretch ratio of the first longitudinal stretching is preferably from 3.0 times to 8.0 times, and more preferably from 4.0 times to 7.0 times. By setting the stretching ratio of the longitudinal stretching to 3.0 times or more, sufficient pore origins can be formed and the orientation of molecules in the longitudinal direction increases. Therefore, the elastic modulus in the longitudinal direction can be improved. Further, by setting the stretching ratio of the longitudinal stretching to 8.0 times or less, the frequency of breakage can be reduced during the stretching. Further, from the viewpoints of formation of pore origins and thermal stability, the stretching ratio of the longitudinal stretching is more preferably from 5.0 times to 6.0 times.

The stretching temperature of the lateral stretching is preferably from 100°C to 160°C, more preferably 110°C to 150°C, and even more preferably 120°C to 145°C. If the stretching temperature in the lateral stretching is within the range as described above, the breakage during the lateral stretching due to the softening of the polyolefin resins hardly occurs, and pore origins formed by the longitudinal stretching are easily expanded, and as a result, a porous film having a high porosity can be obtained.

Further, the stretch ratio of the lateral stretching is preferably from 1.1 times to 6.0 times, more preferably from 1.1 times to 4.0 times, and even more preferably from 1.1 times to 2.0 times. By setting the stretching ratio of the lateral stretching to 1.1 times or more, the size of the pore origins formed by the longitudinal stretching is suitably increased, whereby a biaxially stretched film having a dense pore structure can be obtained. Further, by setting the stretching ratio of the lateral stretching to 6.0 times or less, the frequency of breakage can be reduced during the stretching. Here, by lowering the lateral stretching ratio, suitable pore scale-up is performed while keeping the molecule orientation generated by the longitudinal stretching, and therefore, a separator having excellent permeability can be obtained.

The stretching rate of the lateral stretching is preferably from 100%/min to 10000%/min, more preferably from 200%/min to 5000%/min, and even more preferably from 500%/min to 2000%/min. With the stretching rate in the range as described above, the porous film of the present invention can be prepared efficiently.

In the present invention, the stretching in the flow direction (longitudinal re-stretching) after the biaxial stretching is preferred. By carrying out the longitudinal re-stretching, expression of the wrinkles can be sufficiently inhibited in the drying step of the coat layer.

As for the stretching temperature of the longitudinal re-stretching, the lower limit is preferably 80°C or higher, more preferably 90°C or higher, and even more preferably 100°C or higher. On the other hand, the upper limit is preferably 160°C or lower, more preferably 150°C or lower, and even more preferably 140°C or lower. If the stretching temperature of the longitudinal re-stretching is within the range as described above, the breakage during the stretching is inhibited by the softening of the polypropylene resin, and further, a sufficient shrinkage stress can be obtained in a high-temperature environment, whereby a desired porous film can be obtained.

Furthermore, as for the stretching ratio of the longitudinal re-stretching, the lower limit is preferably 1.1 times or more, and more preferably 1.2 times or more. On the other hand, the upper limit is preferably 3.0 times or less, more preferably 2.5 times or less, and even more preferably 2.0 times or less. By setting the stretching ratio of the longitudinal re-stretching to 1.1 times or more, it is possible to obtain a porous film having a sufficient shrinkage stress in a high-temperature environment. In addition, by setting the stretching ratio of the longitudinal re-stretching to 3.0 times or less, the breakage during the stretching can be inhibited.

Thus, the obtained porous film is preferably subjected to a heat treatment for the purpose of reducing thermal shrinkage. The lower limit of the heat treatment temperature is preferably 130°C or higher, more preferably 135°C or higher, and even more preferably 140°C or higher. When the heat treatment temperature is 130°C or higher, the crystallization of the polypropylene resin is promoted and the residual deformation of the porous film caused by stretching can be reduced. Accordingly, by the heat treatment, reduction in thermal shrinkage can be efficiently obtained, and deterioration of the air permeability in a high-temperature environment can be inhibited.

On the other hand, the upper limit of the heat treatment temperature is preferably 160°C or lower, and more preferably 155°C or lower. By setting the heat treatment temperature to 160°C or lower, the fusion softening of the polypropylene resin to a value more than necessary does not occur, and accordingly, the porous structure of the porous film can be maintained, which is thus preferable.

By the heat treatment, as desired, a 1% to 20% relaxation treatment may be carried out, or a heat treatment under a restriction state may be carried out to promote the crystallization and then a relaxation treatment may be carried out. By being slowly and uniformly cooled after the heat treatment, the porous film of the present invention is obtained.

The stretching and the relaxation treatment are preferably carried out under the following conditions.

The longitudinal stretching is carried out at a stretching temperature of preferably 20°C to 130°C, more preferably 60°C to 110°C, and even more preferably 100°C to 110°C with a stretching ratio of preferably 3.0 times to 8.0 times, more preferably 4.0 times to 7.0 times, and even more preferably 4.5 times to 6.0 times in the flow direction (longitudinal direction),

then the lateral stretching is carried out at a stretching temperature of preferably 100°C to 160°C, and more preferably 110°C to 150°C at a stretching ratio of preferably 1.1 times to 6.0 times, and more preferably 1.1 times to 4.0 times in the direction (lateral direction) perpendicular to the flow direction,

then a relaxation treatment is carried out at preferably a temperature of 130°C or higher and a ratio of 1% to 20%, and more preferably at a temperature of 135°C to 160°C and a ratio of 3% to 12% in the direction (lateral direction) perpendicular to the flow direction, and

thereafter, the longitudinal re-stretching is carried out at a stretching ratio of preferably 1.1 times or more, and more preferably 1.1 times to 3.0 times in the flow direction.

[Description of Separator for Non-Aqueous Electrolytic Solution Secondary Battery]

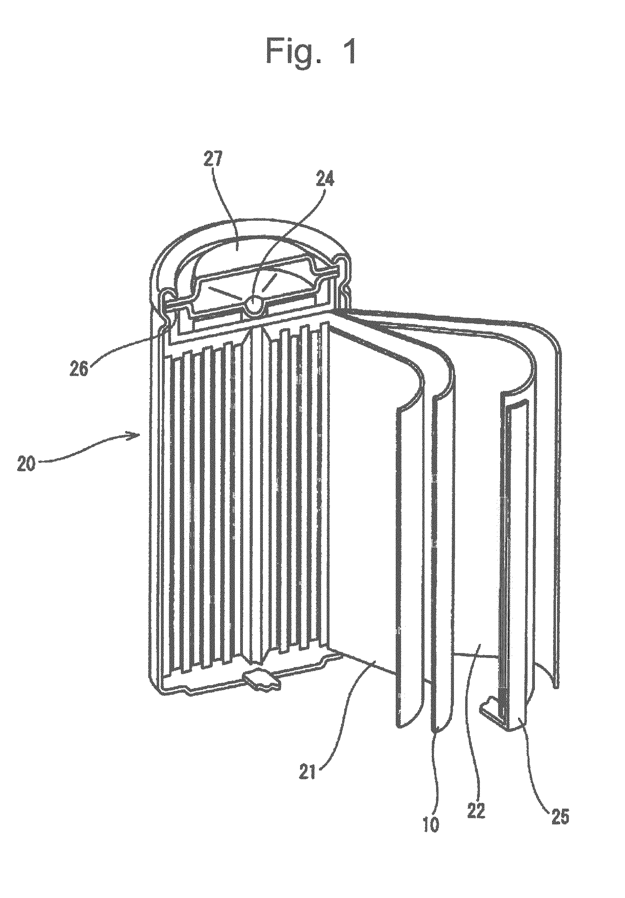

Next, a non-aqueous electrolytic solution battery (lithium ion battery) housing the polyolefin resin porous film of the present invention as a separator for the non-aqueous electrolytic solution secondary battery will be described with reference to Fig. 1.

The anodes of a positive electrode sheet 21 and a negative electrode sheet 22 are wound into a spiral such that they are stacked on top of each other with a separator 10 for a battery therebetween, and the outer end thereof is stuck with a binding tape to form a wound assembly. When winding into a spiral, the thickness of the separator 10 for a battery is preferably from 5 μm to 40 μm, and particularly preferably from 5 μm to 30 μm. By setting the thickness to 5 μm or more, the separator for a battery is hardly broken, and by setting the thickness to 40 μm or less, a large battery area and a large battery dose can be obtained when being wound into a predetermined battery canister for storage.

The wound body consisting of the positive electrode sheet 21, the separator 10 for a battery, and the negative electrode sheet 22 integrally wound together is accommodated in a bottomed cylindrical battery case, and is welded with lead bodies 24 and 25 of the positive and negative electrodes. Next, the electrolyte is poured into a battery canister, and after the electrolyte has sufficiently saturated the separator 10 for the battery and the other components, a positive electrode lid 27 is sealed over the open peripheral edge of the battery canister via a gasket 26, and preliminary charging and aging are carried out to manufacture a tubular non-aqueous electrolytic solution battery.

An electrolytic solution having a lithium salt as the electrolytic solution, which is dissolved in an organic solvent, is used as the electrolytic solution. The organic solvent is not particularly limited, but examples thereof include esters such as propylene carbonate, ethylene carbonate, butylene carbonate, γ-butyrolactone, γ-valerolactone, dimethyl carbonate, methyl propionate, and butyl acetate; nitriles such as acetonitriles; ethers such as 1,2-dimethoxyethane, 1,2-dimethoxy methane, dimethoxypropane, 1,3-dioxolane, tetrahydrofuran, 2-methyl tetrahydrofuran, and 4-methyl-1,3-dioxolane; and sulfolane. These examples can be used singly or in mixtures of two or more kinds thereof.

Among these, preferred is an electrolyte in which lithium hexafluorophosphate ($LiPF_6$) is dissolved at a proportion of 1.0 mol/L in a solvent consisting of 2 parts by mass of methyl ethyl carbonate mixed with 1 part by mass of ethylene carbonate.

For the negative electrode, an alkali metal or a compound containing an alkali metal is integrated with a current-collecting material such as a stainless steel mesh. Examples of the alkali metal include lithium, sodium, and potassium. Examples of the compound containing the alkali metal include alloys of an alkali metal and aluminum, lead, indium, potassium, cadmium, tin, and magnesium; compounds of an alkali metal and a carbon material; and compounds of an alkali metal of low electric potential and either a metal oxide or a sulfide.

When a carbon material is used for the negative electrode, the carbon material is preferably one that can be doped and undoped with lithium ions, and for example, graphite, pyrolytic carbons, cokes, glassy carbons, sintered organic polymer compounds, meso carbon microbeads, carbon fibers, activated carbon, or the like can be used.

For the negative electrode to be used in the present embodiment, a carbon material having an average particle diameter of 10 μm is mixed into a solution consisting of vinylidene fluoride dissolved in N-methyl pyrrolidone to form a slurry, and this negative electrode compound slurry is passed through a 70-mesh sieve to remove large particles and uniformly applied as a coating on both surfaces of a negative electrode current collector composed of a strip of copper foil having a thickness of 18 μm, then the coating was dried, then press-formed by a roll press, and cut into a strip-shaped negative electrode sheet.

For the positive electrode to be used, a metal oxide such as lithium cobalt oxide, lithium nickel oxide, lithium manganese oxide, manganese dioxide, vanadium pentoxide, and chromium oxide, and a metal sulfide such as molybdenum disulfide are used as active materials, a suitable amount of an electroconductive aid or a bonding agent or the like such as polytetrafluoroethylene is added to these positive electrode active materials, and the resulting compound is finished into a formed body using a current-collecting material such as a stainless steel mesh as a core material.

In the present embodiment, a strip-shaped positive electrode sheet prepared in the following manner is used as the positive electrode. That is, phosphorous-like graphite is added in a mass ratio of (lithium cobalt oxide:phosphorous-like graphite) of 90:5 as an electroconductive aid and mixed with lithium cobalt oxide ($LiCoO_2$), and this mixture is mixed with a solution of polyvinylidene fluoride dissolved in N-methyl pyrrolidone to form a slurry. This positive electrode compound slurry is passed through a 70-mesh sieve to remove large particles, and then uniformly applied as a coating on both surfaces of a positive electrode current collector composed of aluminum foil having a thickness of 20 μm, then the coating is dried, then press-formed by a roll press, and the result is cut into a strip-shaped positive electrode sheet.

Examples

Examples and Comparative Examples are presented below and the polyolefin resin porous film of the present invention will be described in detail, but the present invention is not limited to these Examples.

The obtained polyolefin resin porous film is subjected to measurement and evaluation of various properties in the following manner, and the results thereof are summarized in Table 1.

(1) Thickness

Any ten points in the surface were measured using a 1/1000 mm-thick dial gauge, and an average thereof was taken as a thickness.

(2) Air Permeability

In accordance with JIS P8117, an air permeability (sec/100 ml) was measured in an environment at 20°C.

(3) 1% Modulus in Flow Direction at 90°C

In accordance with JIS K7127, tension at 1% stretching in the flow direction at 90°C was measured, and a 1% modulus in the flow direction at 90°C was calculated on the basis of the following equation. Further, the results evaluated on the basis of the following criteria are also shown.

$$\text{(1\% Modulus)} = \text{(Tension at 1\% stretching)}/\text{(Cross-sectional area of film before stretching)}$$

A: The modulus in the flow direction at 90°C is 4.5 MPa or more.

B: The modulus in the flow direction at 90°C is less than 4.5 MPa.

(4) Shrinkage Stress in Flow Direction at 90°C

Measurement was carried out using a thermal stress-strain measuring device (TMA/SS150, manufactured by Seiko Co., Ltd.) to obtain a shrinkage stress in the flow direction at 90°C. The measurement conditions were as follows. The measurement was carried out under the conditions of a sample width of 3 mm, a chuck distance of 5 mm, a heating rate of 3°C/min, and a load of 9.8 kN/m$^2$. Further, the results evaluated on the basis of the following criteria are also shown.

A: The shrinkage stress in the flow direction at 90°C is 1.5 MPa or more.

B: The shrinkage stress in the flow direction at 90°C is less than 1.5 MPa.

(5) Transportability

A film roll of the obtained polyolefin resin porous film was slit by slit equipment having a slit width of 200 mm to obtain a slit roll having a length of 1000 mm at a winding tension of 10 N. The obtained slit roll was transported for 10 min by a coater equipment, and the wrinkle state at an outlet was checked and evaluated according to the following criteria. Further, the transport conditions were as follows: the oven temperature was 90°C, the transport tension in the oven was 30 N, and the running speed was 40 m/min.

A: Wrinkles were not expressed.
B: Wrinkles were expressed.

Further, for the obtained polyolefin resin porous film, the β crystal activity was evaluated in the following manner.

(6) Differential Scanning Calorimetry (DSC)

Using a differential scanning calorimeter (DSC-7) manufactured by PerkinElmer Inc., the polyolefin resin porous film was heated from 25°C to 240°C at a heating rate of 10°C/min and maintained at this temperature for 1 minute, then cooled from 240°C to 25°C at a cooling rate of 10°C/min and maintained at this temperature for 1 minute. The film was reheated from 25°C to 240°C at a heating rate of 10°C/min. The presence or absence of β crystal activity was evaluated according to whether a peak was detected in the range of 145°C to 160°C, i.e., the crystal fusion peak temperature (Tmβ) derived from β crystals of the polypropylene resin, during reheating according to the following criteria:

A: A case where Tmβ was detected in the range of 145°C to 160°C (β crystal activity was determined).
B: A case where no Tmβ was detected in the range of 145°C to 160°C (no β crystal activity was determined).

Further, the measurement of β crystal activity was carried out with a sample amount of 10 mg under a nitrogen atmosphere.

(7) Wide-Angle X-Ray Diffractometry (XRD)

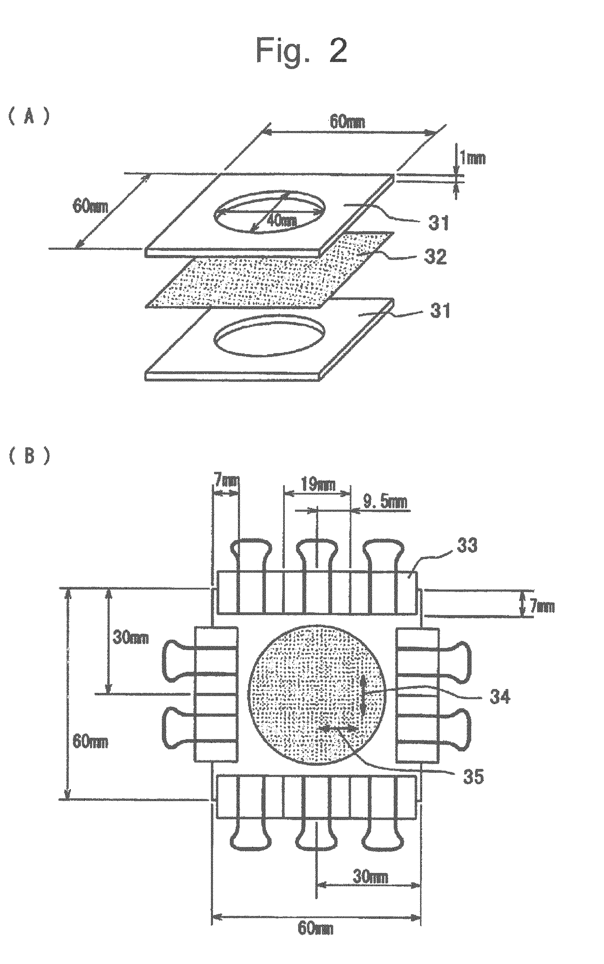

As shown in FIG. 2(A), as a sample, a sample prepared by cutting the polyolefin resin porous film to a length of 60 mm and a width of 60 mm was held between two aluminum plates (material: JIS A5052, size: 60 mm long, 60 mm wide, and 1 mm thick) having a circular hole with a diameter of 40 mm in the center thereof, and the periphery thereof was fastened with a clip as shown in FIG. 2(B).

The sample of the polyolefin resin porous film held between the two aluminum plates was placed in a forced-circulation constant-temperature oven (model: DKN602, manufactured by Yamato Scientific Co., Ltd.) at a set temperature of 180°C and a displayed temperature of 180°C for 3 minutes. The set temperature was then changed to 100°C to gradually cool the sample to 100°C over 10 minutes or more. When the displayed temperature reached 100°C, the sample was removed and cooled in an atmosphere at 25°C for 5 minutes while being held between the two aluminum plates. Wide-angle X-ray diffractometry was carried out on the circular portion with a diameter of 40 mm in the center of the film under the following measurement conditions.

- Wide-angle X-ray diffractometer: model: XMP18A, manufactured by Mac Science,
- X-ray source: Cu-K$\alpha$ line, power: 40 kV, 200 mA
- Scan method: 2$\theta$/$\theta$ scan, 2$\theta$ range: 5° to 25°, scan interval: 0.05°, and scan rate: 5°/min

For the obtained diffraction profile, the presence or absence of $\beta$ crystal activity was evaluated from a peak derived from the (300) plane of the $\beta$ crystals of the polypropylene resin in the following manner:

A: A case where a peak was detected in the range 2$\theta$ = 16.0° to 16.5° ($\beta$ crystal activity was determined).
B: A case where no peak was detected in the range 2$\theta$ = 16.0° to 16.5° (no $\beta$ crystal activity was determined).

Further, in the case where the film plate cannot be cut to a length of 60 mm and a width of 60 mm, the size of the sample may be adjusted such that the porous film is provided in the circular hole with a diameter of 40 mm$\phi$ in the center of the aluminum plates.

[Examples and Comparative Examples]

0.1 parts by mass of 3,9-bis[4-(N-cyclohexylcarbamoyl)phenyl]-2,4,8,10-tetraoxaspiro[5.5]undecane as a $\beta$ crystal nucleating agent was added to 100 parts by mass of Prime Polypro F300SV (manufactured by Prime Polymer Co., Ltd., MFR: 3.0 g/10 min) as a polypropylene resin. The mixture was then introduced into a twin-screw extruder (pore diameter: 40 mm$\phi$, L/D: 32, manufactured by Toshiba Machine Co., Ltd.) and melt-mixed at a set temperature of 270°C. Then, the strand was solidified by cooling in a water bath at 24°C and cut into pellets by a pelletizer.

Then, using a single-screw extruder (pore diameter: 40 mm$\phi$, L/D: 32, manufactured by Mitsubishi Heavy Industries, Ltd.), melt-mixing was carried out at a set temperature of 200°C, and then the molten resin sheet extruded from a T-die was received by a cast roll at the temperature described in Table 1, and solidified by cooling to obtain a film-shaped material having a width of 300 mm and a thickness of 80 $\mu$m. At this time, the contact time between the molten resin sheet and the cast roll was 15 seconds.

The obtained film-shaped material was subjected to stretching in the longitudinal direction at the stretching temperature and the stretching ratio described in Table 1, using a roll longitudinal stretching machine. Then, the film tenter equipment (manufactured by Kyoto Machinery Co., Ltd.) was subjected to stretching in the lateral direction at the stretching temperature and the stretching ratio described in Table 1, and then subjected to sufficient heat fixing and then to heat relaxation in the lateral direction at the relaxation temperature and the relaxation rate described in Table 1, thereby obtaining a porous film.

Then, the obtained porous film was subjected to stretching in the longitudinal direction at the stretching temperature and the stretching ratio between the rolls, using a roll longitudinal stretching machine, and then to heat relaxation in the 3% longitudinal direction at 120°C in a heat treatment roll, thereby obtaining a final porous film. The obtained physical properties are shown in Table 1.

[Table 1]

| Items | | Unit | Example 1 | Example 2 | Example 3 | Comparative Example 1 |
|---|---|---|---|---|---|---|
| Longitudinal stretching | Stretching ratio | Times | 4.5 | 4.5 | 5.5 | 4.5 |
| | Stretching temperature | °C | 110 | 100 | 105 | 105 |

(continued)

| Items | | Unit | Example 1 | Example 2 | Example 3 | Comparative Example 1 |
|---|---|---|---|---|---|---|
| Lateral stretching | Stretching ratio | Times | 1.7 | 2.1 | 1.9 | 2.1 |
| | Stretching temperature | °C | 140 | 145 | 150 | 145 |
| Lateral relaxation | Relaxation ratio | % | 3 | 12 | 9 | 9 |
| | Relaxation temperature | °C | 155 | 155 | 155 | 155 |
| Longitudinal re-stretching | Stretching ratio | Times | 1.1 | 1.2 | 1.2 | 1.0 |
| | Stretching temperature | °C | 120 | 100 | 140 | 100 |
| Thickness | | μm | 20 | 20 | 20 | 20 |
| Air permeability | | sec/100 ml | 250 | 350 | 450 | 150 |
| 1% Modulus in the flow direction at 90°C | | MPa | 6.8 A | 9.4 A | 10.2 A | 3.8 B |
| Shrinkage stress in the flow direction at 90°C | | MPa | 3.2 A | 4.1 A | 5.4 A | 0.6 B |
| Transportability | | - | A | A | A | B |
| DSC | | - | A | A | A | A |
| XRD | | - | A | A | A | A |

The polyolefin resin porous film that had been subjected to longitudinal re-stretching as in Examples 1 to 3 had a 1% modulus in the flow direction at 90°C of 4.5 MPa or more and a shrinkage stress in the flow direction at 90°C of 1.5 MPa or more and as a result, a polyolefin resin porous film, which has excellent transportability, that is, does not express wrinkles in the drying step of the coat layer, was provided.

On the other hand, the polyolefin resin porous film that had been subjected to longitudinal re-stretching as in Comparative Example 1 had a 1% modulus in the flow direction at 90°C and a shrinkage stress in the flow direction at 90°C, each of which does not meet the defined range, and as a result, a polyolefin resin porous film, which has insufficient transportability, that is, easily expresses wrinkles in the drying step of the coat layer, was provided.

Industrial Applicability

The porous film of the present invention has excellent air permeability and elastic modulus, and therefore, can be used as a porous film in various fields. Reference Signs List

10    Separator for a Non-Aqueous Electrolytic Solution Secondary Battery
20    Non-Aqueous Electrolytic Solution Secondary Battery
21    Positive Electrode Sheet
22    Negative Electrode Sheet
31    Aluminum Plate
32    Porous Film
33    Clip
34    Longitudinal Direction of Film
35    Lateral Direction of Film

**Claims**

1.  A polyolefin resin porous film having a 1% modulus in the flow direction at 90°C of 4.5 MPa or more and an air permeability of 800 sec/100 ml or less.

**2.** The polyolefin resin porous film according to claim 1, wherein the shrinkage stress in the flow direction at 90°C is 1.5 MPa or more.

**3.** The polyolefin resin porous film according to claim 1 or 2, wherein the polyolefin resin has a polypropylene resin as a main component.

**4.** The polyolefin resin porous film according to any one of claims 1 to 3, which has a β crystal activity.

**5.** The polyolefin resin porous film according to any one of claims 1 to 4, which is subjected to biaxial stretching and then to stretching in the flow direction.

**6.** The polyolefin resin porous film according to any one of claims 1 to 5, wherein a coat layer is laminated on at least one side surface.

**7.** A separator for a non-aqueous electrolytic secondary battery, consisting of the polyolefin resin porous film according to any one of claims 1 to 6.

**8.** A non-aqueous electrolytic secondary battery comprising the separator for a non-aqueous electrolytic secondary battery according to claim 7.

**9.** A method for forming the polyolefin resin porous film according to claim 5, wherein for the biaxial stretching, the longitudinal stretching is carried out at a stretching temperature of 20°C to 130°C and at a stretching ratio of 3.0 times to 8.0 times in the flow direction (longitudinal direction), and then lateral stretching is carried out at a stretching temperature of 100°C to 160°C and a stretching ratio of 1.1 times to 6.0 times in the direction (lateral direction) perpendicular to the flow direction,
a 1% to 20% relaxation treatment is carried out at 130°C or higher in the direction (lateral direction) perpendicular to the flow direction, and
thereafter, longitudinal re-stretching is carried out at a stretching ratio of 1.1 times or more in the flow direction (longitudinal direction).

# Fig. 1

# Fig. 2

（A）

（B）

<div align="center">

**INTERNATIONAL SEARCH REPORT**

</div>

| | International application No. |
|---|---|
| | PCT/JP2013/065573 |

| A. CLASSIFICATION OF SUBJECT MATTER |
|---|
| *C08J9/00*(2006.01)i, *H01M2/16*(2006.01)i |
| |
| According to International Patent Classification (IPC) or to both national classification and IPC |

| B. FIELDS SEARCHED |
|---|
| Minimum documentation searched (classification system followed by classification symbols) |
| C08J9/00, H01M2/16 |
| |
| Documentation searched other than minimum documentation to the extent that such documents are included in the fields searched |
| Jitsuyo Shinan Koho        1922–1996    Jitsuyo Shinan Toroku Koho    1996–2013<br>Kokai Jitsuyo Shinan Koho   1971–2013    Toroku Jitsuyo Shinan Koho    1994–2013 |
| |
| Electronic data base consulted during the international search (name of data base and, where practicable, search terms used) |
| |

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2012-33315 A (Konica Minolta Opto, Inc.),<br>16 February 2012 (16.02.2012),<br>claims 1, 4; paragraphs [0005], [0139] to<br>[0150], [0159]<br>(Family: none) | 1-5,7-9<br>6 |
| X<br>Y | JP 2012-89243 A (Konica Minolta Opto, Inc.),<br>10 May 2012 (10.05.2012),<br>claims 1, 6; paragraphs [0005], [0054] to<br>[0062], [0069]<br>(Family: none) | 1-5,7-9<br>6 |
| Y | JP 2011-110704 A (Mitsubishi Plastics, Inc.),<br>09 June 2011 (09.06.2011),<br>claims 1, 4, 6, 7<br>(Family: none) | 6 |

| ☒   Further documents are listed in the continuation of Box C. | ☐   See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered    to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
|    06 September, 2013 (06.09.13) |    17 September, 2013 (17.09.13) |

| Name and mailing address of the ISA/ | Authorized officer |
|---|---|
|    Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/065573 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-107252 A  (Toray Industries, Inc.), 07 June 2012 (07.06.2012), claims 1, 3, 5; paragraphs [0031], [0095] & JP 4984890 B         & US 2007/0178324 A1 & EP 1757653 A1        & EP 2270081 A1 & WO 2005/103127 A1 | 1-9 |
| A | WO 2010/147149 A1  (Mitsubishi Plastics, Inc.), 23 December 2010 (23.12.2010), paragraphs [0008], [0037], [0045] to [0049] & JP 4838910 B         & JP 2011-256402 A & US 2012/0101180 A1     & EP 2444453 A1 | 1-9 |
| A | JP 2002-151044 A  (Sumitomo Chemical Co., Ltd.), 24 May 2002 (24.05.2002), claims 1, 7 & US 2002/0055036 A1     & EP 1184917 A2 | 1-9 |
| A | WO 2007/046226 A1  (Toray Industries, Inc.), 26 April 2007 (26.04.2007), claims 1 to 11; paragraphs [0008], [0020] & JP 5145712 B         & US 2009/0219672 A1 & EP 1950821 A1 | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002151044 A
- JP 2011110704 A
- JP 2007046226 A
- JP 2010147149 A
- JP 3739481 B

- JP 2003306585 A
- JP 6289566 A
- JP 9194650 A
- BE 607032
- JP 4181651 A

**Non-patent literature cited in the description**

- **A. ZAMBELLI et al.** *Macromolecules,* 1975, vol. 8, 687
- *Macromol. Chem.,* 1986, vol. 187, 643-652

- *Prog. Polym. Sci.,* 1991, vol. 16, 361-404
- *Macromol. Symp.,* 1995, vol. 89, 499-511
- *Macromol. Chem.,* 1964, vol. 75, 134